# EUROPEAN PATENT SPECIFICATION

(11) **EP 4 566 857 B1**
(45) Date of publication and mention of the grant of the patent: **13.05.2026**
(21) Application number: 24216808.6
(22) Date of filing: 02.12.2024
(51) Int. Cl.: B60J 7/16

(54) **LIFTABLE ROOF FOR RECREATIONAL VEHICLES**
AUFHEBBARES DACH FÜR FREIZEITFAHRZEUGE
TOIT LEVABLE POUR VÉHICULES DE LOISIRS

(30) Priority: 07.12.2023 IT 202300026253
(43) Date of publication of application: 11.06.2025
(73) Proprietor: LCI Italy S.r.l., 50026 San Casciano in Val di Pesa (FI) (IT)
(72) Inventor: BERNARDESCHI, Paolo, Ponsacco (Pisa) (IT); MINUTI, Riccardo, San Miniato Basso (Pisa) (IT); PIRILLO, Carmela, Pisa (IT); ROMAGNOLI, Fabio, Greve in Chianti (FI) (IT)
(74) Representative: Firmati, Leonardo

(56) References cited:
- EP-A1- 4 177 089
- CH-A- 289 572
- DE-A1- 2 809 711
- DE-A1- 2 826 777

## Description

This invention relates to a liftable roof for recreational vehicles.

More specifically, the invention relates to a roof for vehicles such as vans, mini-vans, camper vans, or the like, also known as "recreational vehicles", that is to say, suitable for transporting persons and for leisure time and being such as to comprise an internal living space.

More specifically, with reference to the van-type recreational vehicles, for which the solution according to the invention can be applied, the living space inside the above-mentioned van-type recreational vehicles is usually small; for the reason, the need is always felt to increase the available space as much as possible.

The vans are vehicles suitable for camping, which substantially maintain the bodywork of the van for commercial use from which they derive.

Various types of accessories, such as windows, fly screens, ventilation grilles, access doors, service doors, etc, etc. are applied stably to the bodywork of the commercial van, in order to convert it into a van-type recreational vehicle.

In addition to the above changes to the exterior bodywork of the van, clearly, the furniture in the interior space is also installed.

Recreational vehicles of the van type, exist both in "low" and "high" versions, depending on the height of the rear cabin of the van from which they derive.

The invention can be applied on both types of versions. The liftable roofs therefore allow the internal space of the vehicle to be considerably increased, for example by providing an additional space which can be used as a "night zone" compartment for the users.

There are currently various solutions of liftable roofs for recreational vehicles.

All the prior art solutions comprise a lower frame which is fixed to the original ceiling of the van (on which there is an opening for access from the cabin of the van), and an upper cover is connected to the lower frame by means of mechanisms for movement by levers and tie rods. Document DE 28 26 777 A1 discloses such lower frame and upper cover.

According to known liftable roofs, such as disclosed in document EP 4 177 089 A1, the upper cover and the lower frame are generally made of plastic material such as, for example, ABS and PMMA or fiberglass.

The movement mechanisms allow the upper lid to be moved between a first lowered configuration, that is to say, non-operational (with the vehicle travelling), in which the cover is positioned in direct contact with the lower frame, and a second raised configuration, that is to say, operational (with the vehicle parked), in which the above-mentioned additional space is obtained.

The upper cover is generally connected by a flexible awning to the lower frame.

The awning makes it possible to obtain a closed space also laterally and it can be used by the user.

The known solutions generally involve the use of covers made of very resistant material in order to ensure the support of any loads.

The known lifting roofs guarantee a good solution but certainly not without drawbacks.

A first drawback of known lifting roofs is that they often do not allow an adequate discharge of the loads and forces acting on them.

Another drawback of the known lifting roofs is that, in order to overcome the difficult distribution of loads, they are designed so as to make the cover (and in particular the panel that constitutes it) extremely heavy.

The excessive heaviness of the roof results in various drawbacks such as, for example, the drop in efficiency of the vehicle (in particular as a result of the known electrification process) or the increase in fuel consumption.

Another drawback of known lifting roofs is that they often result in high construction costs.

Another drawback is due to the fact that, when the outer layer is made of ABS\PMMA it is not possible to produce it in dark colours, such as black, since, if subjected to heat sources, such as, for example, sunlight, there is a risk of significant plastic deformation which may adversely affect the integrity of the liftable roof.

The aim of the invention is therefore to provide a liftable roof for recreational vehicles which is able to overcome the drawbacks of the prior art.

Another aim of the invention is to provide a liftable roof for recreational vehicles which can be obtained by means of a simple, fast and inexpensive production process.

A further aim of the present invention is to provide a liftable roof for recreational vehicles which is capable of ensuring optimal distribution of the loads without the need to compromise the lightness of the cover and in particular of the cover panel.

Another aim of the present invention is to provide a liftable roof for recreational vehicles such as to reduce the risks related to the thermal expansion of the components.

According to the invention, these aims and others are achieved by a liftable roof for recreational vehicles having the technical features described in the appended claims.

The technical features of the invention, with reference to the above-mentioned aims, are clearly described in the appended claims and its advantages are apparent from the detailed description which follows, with reference to the accompanying drawings which illustrate some purely non-limiting example embodiments of the invention, in which:
- Figure 1 shows a side perspective view from below of a liftable roof for recreational vehicles according to the present invention in a raised configuration;
- Figure 2 shows a side perspective view from above of a particular embodiment of the liftable roof for recreational vehicles, according to a lowered configuration;
- Figure 3 shows a partially sectioned side view to illustrate some internal components of the liftable roof for recreational vehicles of Figure 1;
- Figure 4 shows, in perspective from above, a partially exploded view of the liftable roof for recreational vehicles according to the present invention;
- Figure 5 shows an exploded perspective view from above of the liftable roof for recreational vehicles according to the present invention;
- Figure 6 shows an exploded perspective view from above of a detail of the liftable roof for recreational vehicles according to the present invention;
- Figure 7 illustrates a perspective view from above of a detail of the liftable roof for recreational vehicles according to the present invention;
- Figure 8 illustrates a sectional front view of a detail of the liftable roof for recreational vehicles according to the present invention;

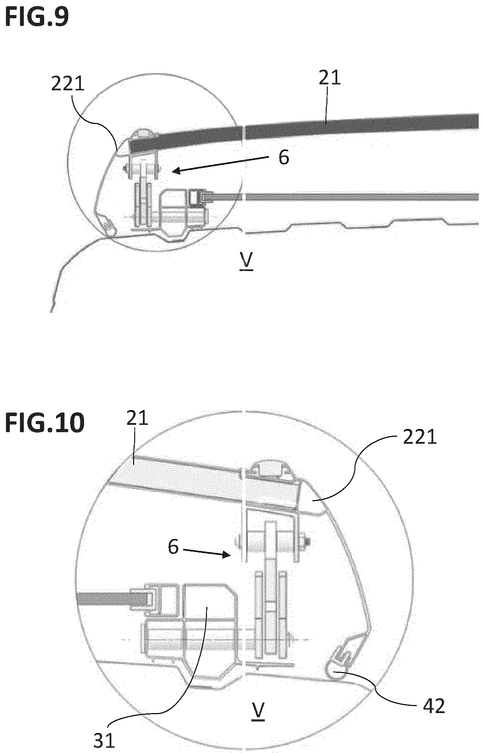

- Figure 9 illustrates a schematic view in front section of a detail of the liftable roof for recreational vehicles according to the present invention;
- Figure 10 illustrates a schematic view in zoomed front section of the detail of Figure 9.

With reference to the accompanying drawings, the numeral 1 denotes in its entirety a liftable roof for recreational vehicles V made in accordance with the invention, hereinafter also referred to simply as the roof 1.

The roof 1 according to the present invention comprises an upper load-bearing cover 2 for covering an opening made in an upper surface of a recreational vehicle V.

The term upper load-bearing cover 2 means a cover that, in addition to performing the typical covering function, also enables a load-bearing capacity such as to guarantee an optimal distribution of the loads.

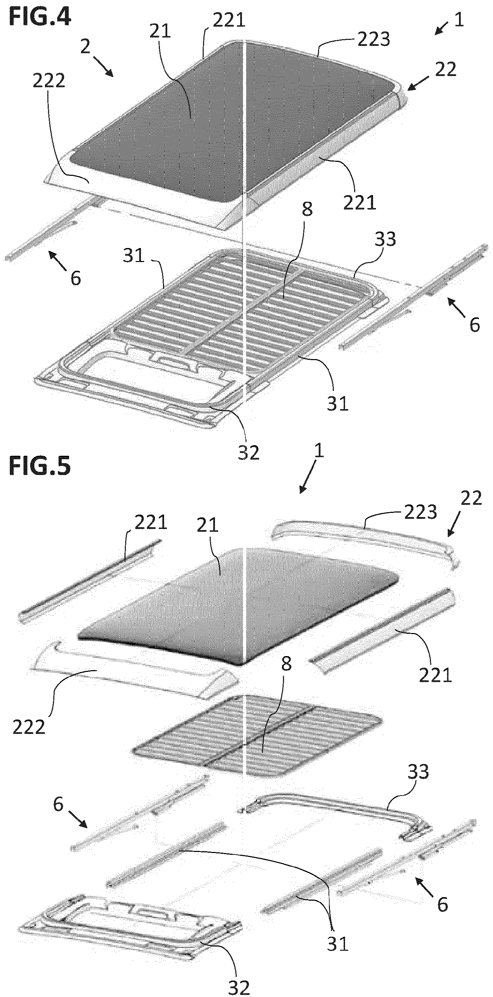

With reference to the Figures 4 and 5, the upper load-bearing cover 2 comprises a covering panel 21 and respective perimeter edges 22 of the panel 21 itself.

These perimeter edges 22 are permanently fixed to the panel.

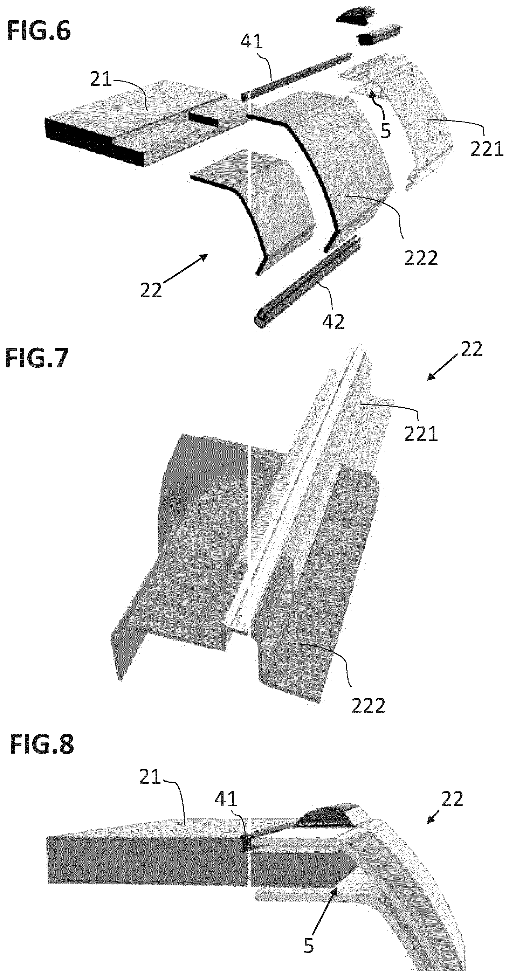

Advantageously, with reference to Figures 6 and 8, the edges 22 have a cavity 5 for containing the panel 21.

In particular, the cavity 5 is substantially shaped to match respective lateral sections of the panel 21.

The perimeter edges 22 comprise two first lateral profiles 221 made of aluminium.

In particular, these two first lateral profiles 221 made of aluminium are of the type made by extrusion.

These two first lateral profiles 221 allow an optimisation of the strength of the cover, guaranteeing optimal discharging of the loads and at the same time also guaranteeing adequate lightness.

In addition, the fact that these two first lateral profiles 221 guarantee an optimal strength also allows the panel 21 to be made lighter.

Advantageously, the perimeter edges 22 comprise a first front section 222 stably fixed on respective front ends of the above-mentioned two first lateral profiles 221.

This first front section 222 is advantageously made of polymeric material.

Advantageously also, the perimeter edges 22 comprise a first rear section 223 stably fixed on respective rear ends of the above-mentioned two first lateral profiles 221.

Said first rear section 223 is advantageously made of polymeric material.

With reference to Figures 4 and 5, the roof 1 according to the present invention comprises a lower frame 3 stably connectable to the upper surface of the recreational vehicle V.

The roof 1 according to the present invention also comprises movement means 6 interposed and operatively connected to the upper load-bearing cover 2 and to the lower frame 3.

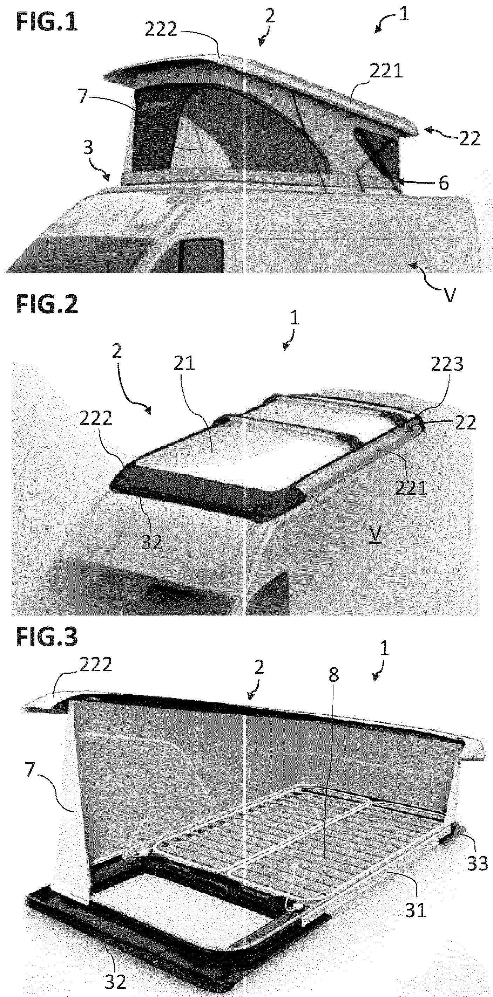

The movement means 6 are configured to move the upper cover 2 with respect to the frame 3 between a lowered position (illustrated for example in Figure 1), and a raised position (illustrated in Figure 2).

In the second raised position the cover 2 may be positioned substantially parallel to the lower frame 3 (concertina-like opening) or inclined with respect to it, that is to say, with one side of the cover 2 which remains substantially in contact with the respective side of the lower frame 3 (compass-type opening).

The upper cover 2 is kept in the lowered non-operating position by locking elements, such as, for example, handles or hinges, not shown in the drawings.

The upper cover 2 is kept in the raised position by the mechanical action of the movement means 6.

Advantageously the movement means 6 comprise four-bar linkages.

In addition or alternatively, the movement means 6 comprise lever mechanisms such as for example gas springs and/or tie rods.

Advantageously, the four-bar linkages (defined by the movement means 6) are fixed below two second lateral profiles 31 made of aluminium (described in more detail below), and above the first two lateral profiles 221 made of aluminium.

Advantageously, the lower frame 3 comprises two second lateral profiles 31 made of aluminium.

These two second later profiles 31 made of aluminium being of the type made by extrusion and extending for respective longitudinal sections of the lower frame 3.

Basically, the fact that the four-bar linkages are stably fixed above the two first lateral profiles 221 made of aluminium, and below the two second lateral profiles 31 made of aluminium, allows the structural strength of the roof 1 according to the present invention to be further optimised.

The lower frame 3 comprises a second front section 32 made of polymeric material.

Said second front section 32 is fixed on respective front ends of the two second lateral profiles 31.

The fixing of the second front section 32 with the above-mentioned front ends of the two second lateral profiles 31 is carried out by interlocking and gluing.

The lower frame 3 comprises a second rear section 33 made of polymeric material.

Said second rear section 33 is fixed on respective rear ends of the two second lateral profiles 31.

The fixing of the second rear section 33 with the above-mentioned front ends of the two second lateral profiles 31 is carried out by interlocking and gluing.

With reference to Figures 6 and 8, the roof 1 according to the present invention comprises a first seal 41 arranged between each of the two first lateral profiles 221 and the panel 21.

Substantially, the engagement between the cavity 5 of the perimeter edges 22 and the panel 21 causes a gap to be created in which this first seal 41 is positioned.

In particular, the first seal 41 is configured to allow the passage (protected) of electrical wires, as well as having a function of sealing and protection against any passage of water from the gaps.

With reference to Figure 6, the roof 1 according to the present invention comprises a second seal 42 arranged between each of the two first lateral profiles (221) (and generally between the perimeter edges 22), and the upper surface of the vehicle V.

Alternatively, this second seal rests on a side surface of the vehicle V.

This second seal 42 makes it possible to optimise the sealing of the roof 1.

According to the embodiment illustrated in Figure 2, the roof 1 according to the present invention comprises a plurality of roof bars extending transversely with respect to the two first lateral profiles 221 made of aluminium and made so as to evenly distribute any loads acting on them, on the above-mentioned two first lateral profiles 221 made of aluminium.

Advantageously, the roof 1 according to the present invention comprises means (not illustrated) of locking said movement means 6, such as to prevent the same movement means 6 from any movement in a transversal direction with respect to that of raising/lowering of the upper cover 2.

These locking means allow a further optimisation of the distribution of the loads acting on the upper cover 2.

Advantageously, the roof 1 according to the present invention comprises a flexible awning 7 designed to form a closed space between the upper cover 2 and the lower frame 3.

Inside the closed space created when the upper cover 2 is raised with respect to the lower frame 3 the roof 1 according to the invention comprises a mesh 8 for mattresses or any other means suitable for supporting at least one mattress.

Advantageously, the panel 21 comprises a first resistant upper layer and a second layer of heat-insulating material fixed on a lower surface of the first upper layer and a third resistant layer fixed to a lower surface of the second layer of heat-insulating material. The liftable roof for recreational vehicles according to the invention achieves the preset aims and brings important advantages.

An important advantage of the liftable roof for recreational vehicles according to the present invention is given by the fact that it allows a load-bearing capacity such as to guarantee an optimal distribution of the loads acting on the upper cover thereof and an optimal resistance.

Another important advantage of the liftable roof for recreational vehicles according to the present invention is given by the fact of guaranteeing an optimal degree of lightness of the roof itself in order to optimise the vehicle itself from the point of view of efficiency and fuel consumption.

Another important advantage of the liftable roof for recreational vehicles according to the present invention is given by the fact of guaranteeing a product with low costs and simple and practical production.

## Claims

1. A liftable roof (1) for recreational vehicles, comprising:
- an upper load-bearing cover (2) for covering an opening made in an upper surface of a recreational vehicle (V), said cover (2) comprising a covering panel (21) and respective perimeter edges (22) of said panel (21) stably fixed to it, wherein said perimeter edges (22) comprise two first lateral profiles (221) made of aluminium;
- a lower frame (3) stably connectable to said upper surface of said recreational vehicle (V);
- movement means (6) interposed and operatively connected to said upper load-bearing cover (2) and to said lower frame (3), said movement means (6) being configured to move said upper load-bearing cover (2) relative to said frame (3) between a lowered position and a raised position, said roof (1) being **characterised in that** said perimeter edges (22) further comprise
- a first front stretch (222) made of polymeric material stably fixed on respective front ends of said two first lateral profiles (221);
- a first rear stretch (223) made of polymeric material fixed stably on respective rear ends of said two first lateral profiles (221);
said lower frame (3) comprises two second lateral profiles (31) made of aluminium and
- a second front stretch (32) made of polymeric material fixed stably on respective front ends of said two second lateral profiles (31);
- a second rear stretch (33) made of polymeric material, fixed stably on respective rear ends of said two second lateral profiles (31).

2. The roof (1) according to claim 1, **characterised in that** said movement means (6) comprise four-bar linkages.

3. The roof (1) according to the preceding claim, **characterised in that** said four-bar linkages are fixed below said two second lateral profiles (31) made of aluminium and above said two first lateral profiles (221) made of aluminium.

4. The roof (1) according to any one of the preceding claims, **characterised in that** said perimeter edges (22) comprise a cavity (5) for containing said panel (21), said cavity (5) being substantially shaped to match respective lateral stretches of said panel (21).

5. The roof (1) according to any one of the preceding claims, **characterised in that** it comprises a first seal (41) positioned between each of said two first lateral profiles (221) and said panel (21), said first seal (41) being configured for the passage of electrical wires.

6. The roof (1) according to any one of the preceding claims, **characterised in that** it comprises a second seal (42) positioned between each of said two first lateral profiles (221) and said upper surface of said vehicle (V).

7. The roof (1) according to any one of the preceding claims, **characterised in that** said panel (21) comprises a first resistant upper layer and a second layer made of heat-insulating material fixed on a lower surface of said first upper layer and a third resistant layer fixed to a lower surface of the second layer said heat-insulating material.

## Patentansprüche

1. Aufhebbares Dach (1) für Freizeitfahrzeuge, umfassend:
- eine obere lasttragende Abdeckung (2) zum Abdecken einer Öffnung, die in einer oberen Oberfläche eines Freizeitfahrzeugs (V) ausgebildet ist, wobei die Abdeckung (2) eine Abdeckplatte (21) und jeweilige Umfangskanten (22) der Platte (21) umfasst, die fest an dieser befestigt sind, wobei die Umfangskanten (22) zwei erste seitliche Profile (221) aus Aluminium umfassen;
- einen unteren Rahmen (3), der fest mit der oberen Oberfläche des Freizeitfahrzeugs (V) verbunden werden kann;
- Bewegungsmittel (6), die eingefügt und betriebswirksam mit der oberen lasttragenden Abdeckung (2) und dem unteren Rahmen (3) verbunden sind, wobei die Bewegungsmittel (6) so ausgelegt sind, dass sie die obere lasttragende Abdeckung (2) relativ zum Rahmen (3) zwischen einer abgesenkten Position und einer angehobenen Position bewegen, wobei das Dach (1) **dadurch gekennzeichnet ist, dass** die Umfangskanten (22) ferner Folgendes umfassen:
- einen ersten vorderen Abschnitt (222) aus Polymermaterial, der fest an jeweiligen vorderen Enden der beiden ersten seitlichen Profile (221) befestigt ist;
- einen ersten hinteren Abschnitt (223) aus Polymermaterial, der fest an jeweiligen hinteren Enden der beiden ersten seitlichen Profile (221) befestigt ist;
wobei der untere Rahmen (3) zwei zweite seitliche Profile (31) aus Aluminium umfasst und
- einen zweiten vorderen Abschnitt (32) aus Polymermaterial, der fest an jeweiligen vorderen Enden der beiden zweiten seitlichen Profile (31) befestigt ist;
- einen zweiten hinteren Abschnitt (33) aus Polymermaterial, der fest an jeweiligen hinteren Enden der beiden zweiten seitlichen Profile (31) befestigt ist.

2. Dach (1) nach Anspruch 1, **dadurch gekennzeichnet, dass** die Bewegungsmittel (6) Viergelenkverbindungen umfassen.

3. Dach (1) nach einem vorhergehenden Anspruch, **dadurch gekennzeichnet, dass** die Viergelenkverbindungen unterhalb der beiden zweiten seitlichen Profile (31) aus Aluminium und oberhalb der beiden ersten seitlichen Profile (221) aus Aluminium befestigt sind.

4. Dach (1) nach einem der vorhergehenden Ansprüche, **dadurch gekennzeichnet, dass** die Umfangskanten (22) einen Hohlraum (5) zur Aufnahme der Platte (21) umfassen, wobei der Hohlraum (5) im Wesentlichen so geformt ist, dass er den jeweiligen seitlichen Abschnitten der Platte (21) entspricht.

5. Dach (1) nach einem der vorhergehenden Ansprüche, **dadurch gekennzeichnet, dass** es eine erste Dichtung (41) umfasst, die zwischen jedem der beiden ersten seitlichen Profile (221) und der Platte (21) angeordnet ist, wobei die erste Dichtung (41) für den Durchgang von elektrischen Leitungen ausgelegt ist.

6. Dach (1) nach einem der vorhergehenden Ansprüche, **dadurch gekennzeichnet, dass** es eine zweite Dichtung (42) umfasst, die zwischen jedem der beiden ersten seitlichen Profile (221) und der oberen Oberfläche des Fahrzeugs (V) angeordnet ist.

7. Dach (1) nach einem der vorhergehenden Ansprüche, **dadurch gekennzeichnet, dass** die Platte (21) eine erste widerstandsfähige Oberschicht und eine zweite Schicht aus wärmeisolierendem Material, die an einer unteren Oberfläche der ersten Oberschicht befestigt ist, sowie eine dritte widerstandsfähige Schicht umfasst, die an einer unteren Oberfläche der zweiten Schicht aus wärmeisolierendem Material befestigt ist.

## Revendications

1. Toit relevable (1) pour véhicules de loisirs, comprenant :
- un recouvrement porteur supérieur (2) destiné à recouvrir une ouverture pratiquée dans une surface supérieure d'un véhicule de loisirs (V), ledit recouvrement (2) comprenant un panneau de recouvrement (21) et des bords périphériques respectifs (22) dudit panneau (21) fixés de manière stable à celui-ci, dans lequel lesdits bords périphériques (22) comprennent deux premiers profilés latéraux (221) en aluminium ;
- un cadre inférieur (3) pouvant être relié de manière stable à ladite surface supérieure dudit véhicule de loisirs (V) ;
- des moyens de déplacement (6) interposés et reliés de manière fonctionnelle audit recouvrement porteur supérieur (2) et audit cadre inférieur (3), lesdits moyens de déplacement (6) étant configurés pour déplacer ledit recouvrement porteur supérieur (2) par rapport audit cadre (3) entre une position abaissée et une position relevée, ledit toit (1) étant **caractérisé en ce que** lesdits bords périphériques (22) comprennent en outre :
- une première section avant (222) en matériau polymère fixée de manière stable sur les extrémités avant respectives desdits deux premiers profilés latéraux (221) ;
- une première section arrière (223) en matériau polymère fixée de manière stable sur les extrémités arrière respectives desdits deux premiers profilés latéraux (221) ;
ledit cadre inférieur (3) comprend deux seconds profilés latéraux (31) en aluminium et
- une seconde section avant (32) en matériau polymère fixée de manière stable sur les extrémités avant respectives desdits deux seconds profilés latéraux (31) ;
- une seconde section arrière (33) en matériau polymère fixée de manière stable sur les extrémités arrière respectives desdits deux seconds profilés latéraux (31).

2. Toit (1) selon la revendication 1, **caractérisé en ce que** lesdits moyens de déplacement (6) comprennent des tringleries à quatre barres.

3. Toit (1) selon la revendication précédente, **caractérisé en ce que** lesdites tringleries à quatre barres sont fixées sous lesdits deux seconds profilés latéraux (31) en aluminium et au-dessus desdits deux premiers profilés latéraux (221) en aluminium.

4. Toit (1) selon l'une quelconque des revendications précédentes, **caractérisé en ce que** lesdits bords périphériques (22) comprennent une cavité (5) destinée à contenir ledit panneau (21), ladite cavité (5) étant sensiblement façonnée pour correspondre aux sections latérales respectives dudit panneau (21).

5. Toit (1) selon l'une quelconque des revendications précédentes, **caractérisé en ce qu'**il comprend une première garniture (41) positionnée entre chacun desdits deux premiers profilés latéraux (221) et ledit panneau (21), ladite première garniture (41) étant configurée pour le passage de fils électriques.

6. Toit (1) selon l'une quelconque des revendications précédentes, **caractérisé en ce qu'**il comprend une seconde garniture (42) positionnée entre chacun desdits deux premiers profilés latéraux (221) et ladite surface supérieure dudit véhicule (V).

7. Toit (1) selon l'une quelconque des revendications précédentes, **caractérisé en ce que** ledit panneau (21) comprend une première couche supérieure résistante et une deuxième couche en matériau thermo-isolant fixée sur une surface inférieure de ladite première couche supérieure et une troisième couche résistante fixée à une surface inférieure de ladite deuxième couche en matériau thermo-isolant.
